# EUROPÄISCHE PATENTSCHRIFT

(11) **EP 0 794 518 B1**
(45) Veröffentlichungstag und Bekanntmachung des Hinweises auf die Patenterteilung: **08.05.2002**
(21) Anmeldenummer: 97102354.4
(22) Anmeldetag: 13.02.1997
(51) Int. Cl.: G07D 7/00

(54) **Vorrichtung zur Detektion von remittiertem Licht**
Apparatus for detecting reemitted light
Dispositif pour la détection de lumière réémise

(30) Priorität: 14.02.1996 DE 19605434
(43) Veröffentlichungstag der Anmeldung: 10.09.1997
(73) Patentinhaber: Giesecke & Devrient GmbH, 81677 München (DE)
(72) Erfinder: Lipkowitsch, Nikolaus, 80637 München (DE)
(74) Vertreter: Klunker . Schmitt-Nilson . Hirsch

(56) Entgegenhaltungen:
- EP-A- 0 111 618
- EP-A- 0 366 306
- US-A- 4 131 337
- US-A- 4 526 466

## Beschreibung

Die Erfindung betrifft eine Vorrichtung zur Detektion von Licht, das von einem Blattgut, wie z. B. Banknoten oder Wertpapieren, remittiert wird, gemäß dem Oberbegriff des Hauptanspruchs.

Eine solche Vorrichtung ist beispielsweise aus der EP-OS 0 111 618 bekannt. Sie weist eine Lichtquelle mit Leuchtdioden auf. Das von den Leuchtdioden emittierte Licht wird mittels eines ersten Strahlteilers mit einem halbdurchlässigen Spiegel auf einen gemeinsamen optischen Weg gebracht. Da die Leuchtdioden Licht unterschiedlicher Wellenlänge aussenden, wird vorzugsweise ein dichroitischer Spiegel verwendet, um eine möglichst hohe Lichtintensität zu erreichen.

Ein zweiter Strahlteiler mit einem halbdurchlässigen Spiegel ist so angeordnet, daß das von der Lichtquelle emittierte Licht teilweise durch den zweiten Strahlteiler transmittiert wird und mittels einer Optik auf das Blattgut fokussiert wird, um das Blattgut zu beleuchten. Das vom Blattgut remittierte Licht gelangt durch die Optik auf den Strahlteiler und wird teilweise von diesem auf einen Detektor reflektiert. Dieser dient zur Detektion des vom Blattgut remittierten Lichts.

Ein Nachteil ist es, daß die vom Detektor detektierten Signale einen schlechten Hell-/Dunkelkontrast aufweisen. Aufgrund des halbdurchlässigen Spiegels des zweiten Strahlteilers tritt zudem ein hoher Verlust in der detektierten Lichtmenge gegenüber der von der Lichtquelle emittierten Lichtmenge auf. Weiterhin ist die auf das Blattgut treffende Lichtmenge relativ empfindlich gegen Abstandsschwankungen, da die Lichtmenge lediglich in der Fokuslinie der Optik hoch ist.

Der Erfindung liegt die Aufgabe zugrunde, eine Vorrichtung zur Detektion von Licht vorzuschlagen, das von einem Blattgut remittiert wird, bei dem ein hoher Hell-/Dunkelkontrast der vom Detektor detektierten Signale erreicht wird und gleichzeitig ein möglichst hoher Anteil des von der Lichtquelle emittierten Lichts den Detektor erreicht.

Erfindungsgemäß wird die Aufgabe durch die im Hauptanspruch angegebenen Merkmale gelöst. Vorteilhafte Weiterbildungen sind Gegenstand der Unteransprüche.

Der Grundgedanke der Erfindung besteht darin, innerhalb der Vorrichtung Mittel vorzusehen, die das das Blattgut beleuchtende Licht in einer ersten Polarisationsebene polarisieren und die das den Detektor beleuchtende Licht in einer zweiten Polarisationsebene polarisieren, die senkrecht auf der ersten Polarisationsebene steht.

Ein Vorteil der Erfindung besteht darin, daß aufgrund der Beleuchtung des Blattgutes mit polarisiertem Licht ein hoher Hell-/Dunkelkontrast des am Detektor detektierten Signals erreicht wird. Dadurch daß der Detektor lediglich Licht detektiert, das in einer zweiten Polarisationsebene senkrecht auf die erste Polarisationsebene polarisiert ist, werden gleichzeitig polarisationserhaltende Reflexe vom Blattgut im Detektor vermieden. Lediglich die Anteile des polarisierten Lichts, die aufgrund diffuser Streuung am Blattgut ihre Polarisationsebene geändert haben, gelangen zur Detektion in den Detektor. Die Vorrichtung ist somit besonders zur Detektion diffus streuender Elemente geeignet, wie z. B. das Druckbild einer Banknote.

In einer bevorzugten Ausführungsform wird das in der ersten Polarisationseben polarisierte Licht mittels eines Lasers oder einer Laserdiode in der Lichtquelle erzeugt. Der Strahlteiler ist als polarisierender Strahlteiler ausgeführt und weist Mittel auf, die die in der ersten Polarisationsebene polarisierten Anteile des Lichtes vollständig transmittieren und das Blattgut beleuchten. Die Anteile des vom Blattgut remittierten Lichts, die in Richtung der ersten Polarisationsachse polarisiert sind, werden dann erneut vom Strahlteiler transmittiert und gelangen nicht auf den Detektor. Die Anteile des Lichts, die in der zweiten Polarisationsebene polarisiert sind, werden vom Strahlteiler vollständig reflektiert und gelangen in den Detektor.

Die besonderen Vorteile dieser Ausführungsform bestehen darin, daß die Erzeugung einer hohen Lichtmenge polarisierten Lichts relativ effektiv ist und wenig Primärenergie benötigt, was zu einer geringen Abwärme in der Vorrichtung führt. Eine große Abwärme führt gerade in relativ kompakt aufgebauten Vorrichtungen oft zu Problemen. Weiterhin wird lediglich das diffus gestreute Licht im Detektor detektiert, so daß störende Reflexe weitgehend vermieden werden. Zudem ergibt sich bei dieser Ausführungsform ein sehr geringer Verlust in der von der Lichtquelle erzeugten Lichtmenge. Aufgrund der geringen Divergenz des Laserstrahls ist die auf das Blattgut treffende Lichtmenge relativ unempfindlich gegen Abstandsschwankungen. Auf eine zusätzliche Optik zwischen Strahlteiler und Blattgut kann verzichtet werden.

Weitere Ausführungsformen und Vorteile der Erfindung werden nachfolgend anhand der Figuren beschrieben. Es zeigen:
- Fig. 1: Prinzipskizze der Erfindung,
- Fig. 2: Beleuchtungs- und Detektionsbereich,
- Fig. 3: Detektorergebnis einer Vorrichtung gemäß dem Stand der Technik,
- Fig. 4: Detektorergebnis einer Vorrichtung mit polarisiertem Licht,
- Fig. 5: Detektorergebnis einer Vorrichtung gemäß der Erfindung.

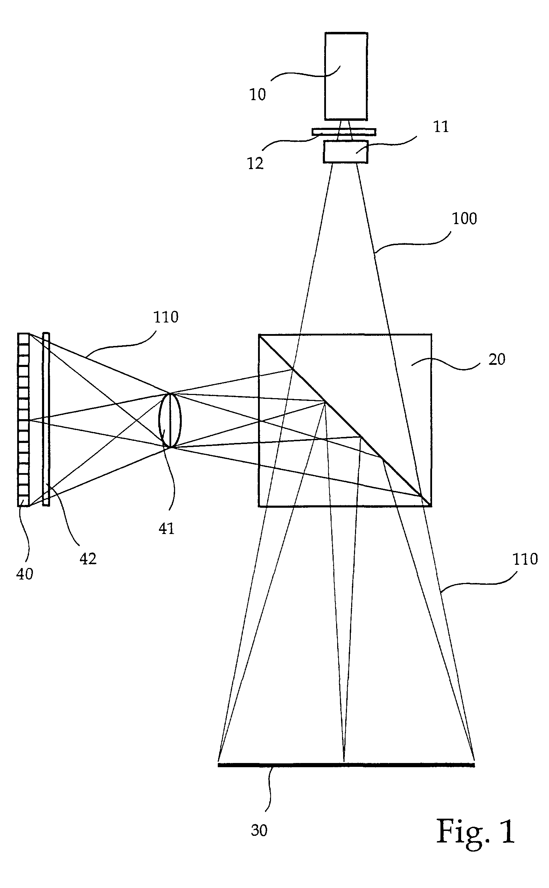

Die Fig. 1 zeigt eine Prinzipskizze der Erfindung. Die Vorrichtung weist eine Lichtquelle 10 zur Emission von Licht 100 auf, das dann mittels einer Optik 11 durch einen Strahlteiler 20 zumindest teilweise auf das Blattgut 30 abgebildet wird. Die vom Strahlteiler transmittierten Anteile des Lichts 100 beleuchten das Blattgut 30. Das vom Blatt remittierte Licht 110 wird zumindest teilweise am Strahlteiler 20 reflektiert und mittels einer Optik 41 auf einen Detektor 40 abgebildet.

Erfindungsgemäß werden in der Vorrichtung zusätzlich Mittel vorgesehen, die das Blattgut beleuchtende Licht 100 in einer ersten Polarisationsebene Pₛ polarisieren. Zusätzlich sind Mittel vorgesehen, die das den Detektor beleuchtende Licht 110 in einer zweiten Polarisationsebene Pₚ polarisieren, die senkrecht auf der ersten Polarisationsebene Pₛ steht. Die Indices "s" und "p" sind hier frei gewählt und sollen als "s" für senkrecht und "p" für parallel stehen.

In einer ersten Ausführungsform wird ein Polarisator 12 zwischen der Lichtquelle 10 und dem Strahlteiler 20 angeordnet, um das von der Lichtquelle 10 emittierte Licht 100 zu polarisieren. Ein weiterer Polarisator 42, der zwischen dem Strahlteiler 20 und dem Detektor 40 angeordnet ist, polarisiert die vom Blattgut 30 remittierten Lichtanteile 110 in einer zweiten Polarisationseben Pₚ, die senkrecht auf der ersten Polarisationsebene Pₛ steht.

In einer weiteren Ausführungsform weist die Lichtquelle 10 bevorzugt einen Laser oder eine Laserdiode auf, wobei der Laser bzw. die Laserdiode bereits in der Polarisationsebene Pₛ polarisiertes Licht emittiert. Solch eine Lichtquelle 10 mit einem Laser oder einer Laserdiode erzeugt effektiv eine hohe Lichtmenge polarisierten Lichts bei verhältnismäßig geringem Energiebedarf. Gleichzeitig entstehen hierbei lediglich geringe Verlustwärmemengen, die gerade in relativ kompakt aufgebauten Vorrichtungen oft zu Problemen führen können. Auf einen zusätzlichen Polarisator 12 kann hier verzichtet werden, so daß eine Lichtabsorption-aneinem solchen Polarisator vermieden wird.

In der bevorzugten Ausführungsform wird der Strahlteiler 20 als polarisierender Strahlteiler 20 ausgeführt. Dieser polarisierende Strahlteiler 20 hat die Eigenschaft, die Anteile des in der ersten Polarisationsebene Pₛ polarisierten Lichts vollständig zu transmittieren, während er die Anteile des in der zweiten Polarisationsebene Pₚ polarisierten Lichts vollständig reflektiert.

In dieser bevorzugten Ausführungsform kann als Lichtquelle 10 entweder eine unpolarisierte Lichtquelle, eine unpolarisierte Lichtquelle mit Polarisator 12 oder eine Lichtquelle mit einem Laser oder einer Laserdiode verwendet werden.

Die Optik 11 ist so ausgeführt, daß das von der Lichtquelle 10 emittierte Licht 100 auf einen ersten, weitgehend homogen ausgeleuchteten, rechteckigen Bereich B₁ auf dem Blattgut 30 abgebildet wird. Diese Ausleuchtung kann beispielsweise mittels einer bestimmten Anordnung von Zylinderlinsen in einer sogenannten Rasterlinsenoptik erreicht werden.

Der Detektor 40 weist bevorzugt ein Detektionsarray aus Fotodioden oder CCDs auf. Die Optik 41 ist so ausgeführt, daß sie das von einem zweiten rechteckigen Bereich B₂ auf dem Blatt remittierte Licht vollständig auf das Detektionsarray des Detektors 40 abbildet.

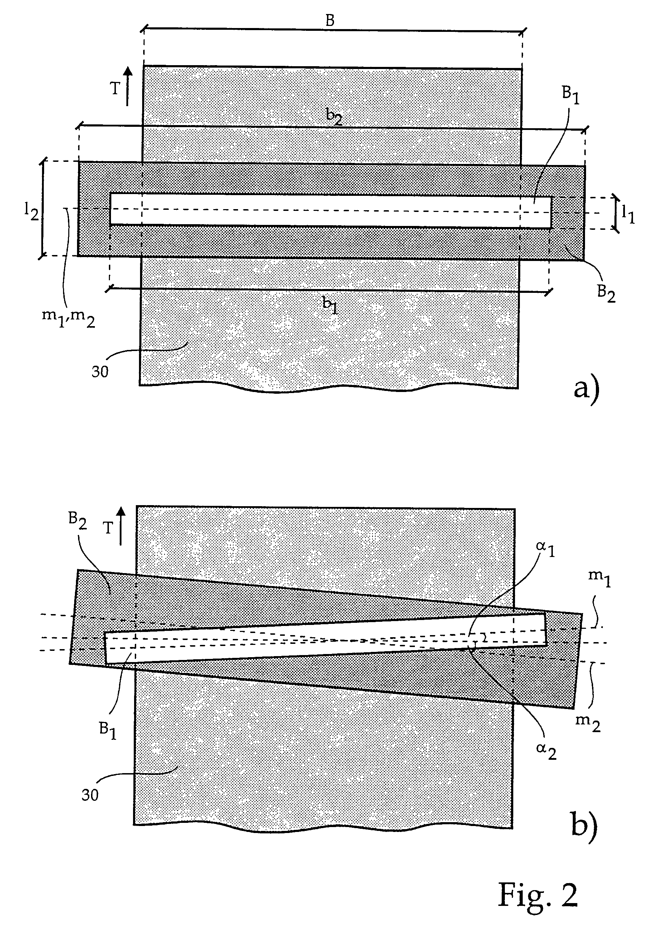

Die Bereiche B₁ und B₂ sind in Fig. 2 dargestellt. Vorzugsweise wird zum einen die Länge l₁ des ersten Bereichs B₁ auf dem Blattgut 30 kleiner oder gleich der Länge l₂ des zweiten Bereichs B₂ auf dem Blattgut 30 und die Breite b₁ des ersten Bereichs B₁ auf dem Blattgut 30 kleiner oder gleich der Breite b₂ des zweiten Bereichs B₂ auf dem Blattgut 30 gewählt. Die beiden Bereiche B₁ und B₂ werden so angeordnet, daß der zweite Bereich B₂ den ersten Bereich B₁ vollständig überdeckt.

Idealerweise werden die Mittelachsen m₁ bzw. m₂ der Bereiche B₁ bzw. B₂, wie in Fig. 2a dargestellt, so angeordnet, daß die Mittelachsen m₁ und m₂ übereinanderliegen und senkrecht auf der Transportrichtung T des Blattguts 30 stehen. So wird erreicht, daß der homogen ausgeleuchtete, rechteckige Bereich B₁ vollständig auf das Detektorarray des Detektors 40 abgebildet wird.

Da der Bereich B₂ den Bereich B₁ vollständig überdeckt, wird der Bereich B₁ auch dann noch vollständig auf das Detektorarray abgebildet, wenn, wie in Fig. 2b dargestellt, die Mittelachsen m₁ bzw. m₂ der Bereiche B₁ bzw. B₂ um einen Winkel α₁ bzw. α₂ gegenüber einer Senkrechten zur Transportrichtung T verdreht sind. Die hierbei tolerierbaren Winkelbereiche hängen von den Dimensionen der Bereiche B₁ bzw.B₂ ab. Solche Verdrehungen der Mittelachsen m₁ bzw. m₂ können beispielsweise bei einer nicht optimalen Justierung der entsprechenden Komponenten zueinander auftreten. Solange gewährleistet bleibt, daß der Bereich B₂ den Bereich B₁ vollständig überdeckt, hat eine solche Verdrehung jedoch lediglich einen zu vernachlässigenden Einfluß auf das vom Detektor 40 detektierte Licht 110.

Da bei der oben beschriebenen Wahl der Bereiche B₁ bzw. B₂ das im Bereich auftreffende Licht vollständig auf das Detektorarray abgebildet wird, spielt auch die Intensitätsverteilung des Lichts in Richtung der Länge l₁ des Bereichs B₁ lediglich eine untergeordnete Rolle.

Wird das Blattgut 30 in Transportrichtung T durch die Vorrichtung transportiert, und jeweils in zeitlichen Abständen ein linienförmiges Graustufenbild vom Detektor 40 detektiert, so erhält man durch Aneinanderfügen der linienförmigen Graustufenbilder ein zumindest teilweises zweidimensionales Bild des Blattguts 30. Soll das gesamte Blattgut detektiert werden, so muß die Breite b₁ des ersten Bereichs B₁ größer oder gleich der Breite B des Blattguts 30 gewählt werden.

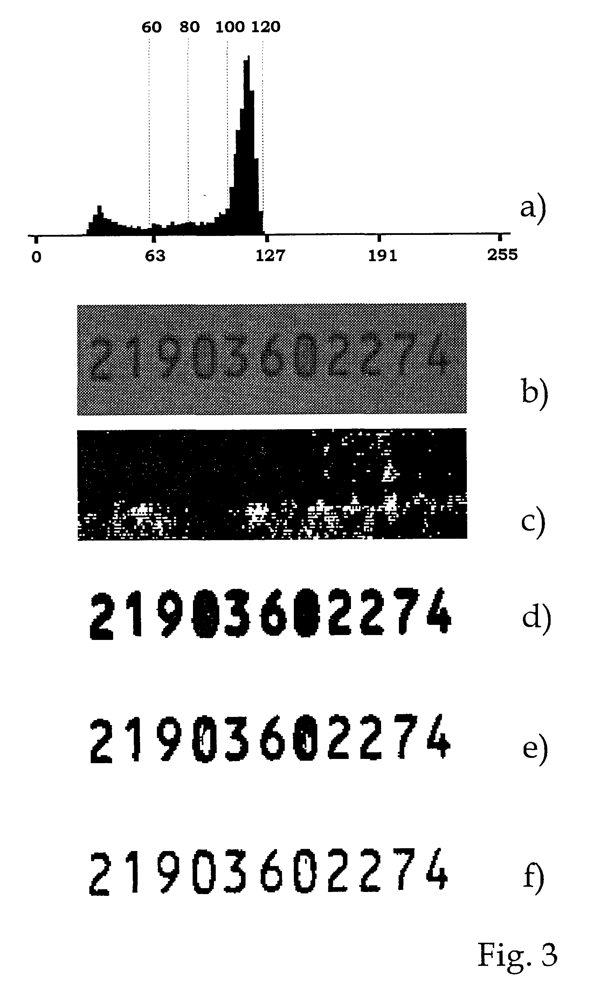

Die Fig. 3 bis 5 veranschaulichen die Wirkungsweisen der oben beschriebenen Vorrichtungen. Die Fig. 3 zeigt das Ergebnis für eine Vorrichtung gemäß dem Stand der Technik, bei der die Lichtquelle 10 unpolarisiertes Licht aussendet. Der Strahlteiler besteht aus einem halbdurchlässigen Spiegel und das vom Blattgut remittierte Licht 110 wird direkt auf den Detektor 40 abgebildet.

Mit der oben beschriebenen Methode erhält man das in Fig. 3b abgebildete Graustufenbild. Die einzelnen Bildpunkte des Graustufenbildes können hierbei Werte zwischen 0 und 255 annehmen. Hierbei steht der Wert 0 für Schwarz und der Wert 255 für Weiß. Die Werte der einzelnen Bildpunkte des in Fig. 3b dargestellten Graustufenbildes sind in Fig. 3a nochmals als Histogramm zusammengefaßt. Idealerweise sollte dieses Histogramm zwei Spitzen aufweisen, wobei die untere den Wert 0 für schwarz dargestellte Ziffern annimmt und die obere Spitze den Wert 255 für den weißen Hintergrund der Ziffern. Das Histogramm in Fig. 3a zeigt jedoch, daß die untere Spitze für die Ziffern ein Maximum bei ca. 35 aufweist und die obere Spitze für den weißen Hintergrund ihr Maximum bei ca. 110. Der Abstand dieser beiden Spitzen und deren Breite kann als Maß für den Hell-/Dunkelkontrast angesehen werden. Ein relativ kleiner Abstand, wie hier dargestellt, steht für einen relativ schlechten Hell-/ Dunkelkontrast.

Zur weiteren Auswertung des detektierten Bildes ist es oft günstig, das Graustufenbild in ein Schwarz-Weiß-Bild umzuwandeln. Im einfachsten Fall wird hierbei eine fester Grenzwert festgelegt. Alle Graustufenwerte kleiner dieses Grenzwerts werden auf 0, also auf Schwarz, gesetzt und alle Graustufenwerte größer dieses Grenzwerts werden auf 255, also Weiß, gesetzt. Die Fig. 3c bis 3f zeigen die entstandenen Schwarz-Weiß-Bilder, wenn man die Grenzwerte auf 120 in 3c, 100 in 3d, 80 in 2e und 60 in 3f festlegt. Wie man leicht sieht, hängt die Güte des Schwarz-Weiß-Bildes stark von der Wahl der Grenzwerte ab. In diesem Fall ist die Ziffer in Fig. 3e, also bei einem Grenzwert von 60 am besten zu erkennen.

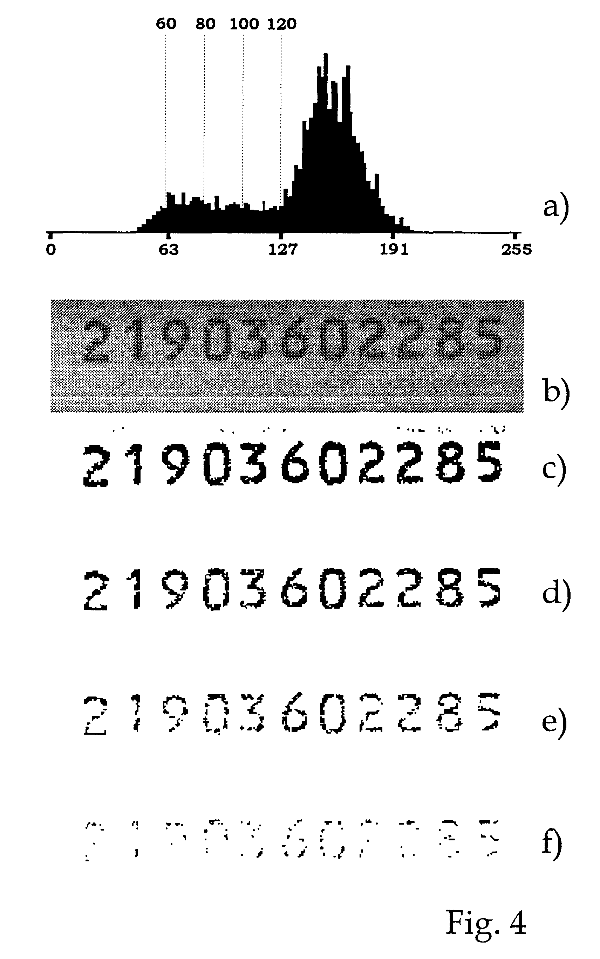

Die Fig. 4 zeigt die zur Fig. 3 analogen Bilder für eine Vorrichtung mit einer polarisierten Lichtquelle 10, also entweder mit einem Polarisator 12 oder einem Laser oder einer Laserdiode. Auch hier wird ein halbdurchlässiger Spiegel als Strahlteiler verwandt und das vom Blattgut remittierte Licht 110 direkt auf den Detektor 40 abgebildet.

Das Histogramm Fig. 4a des Graustufenbildes Fig. 4b zeigt hier zwei Spitzen, bei der die untere bei ca. 65 und die obere bei 150 liegt. Der Abstand der Spitzen ist somit leicht gegenüber der Vorrichtung des Standes der Technik verbessert. Die Breiten der Spitzen sind jedoch verbreitert. Die Schwarz-Weiß-Bilder der Fig. 4c bis 4f entsprechen auch hier den Grenzwerten 120 bis 60. Die Ziffern ist hier augenscheinlich bei einem Grenzwert von 120 gemäß Fig. 4c am deutlichsten zu erkennen.

Wie man im Graustufenbild 4b und in der Schwarz-Weiß-Darstellung 4c sieht, gibt es im Bereich der schwarzen Ziffern eine größere Anzahl weißer Punkte, die von direkten Reflexen des polarisierten Lichtes herrühren und die Erkennung der Ziffern stark erschweren.

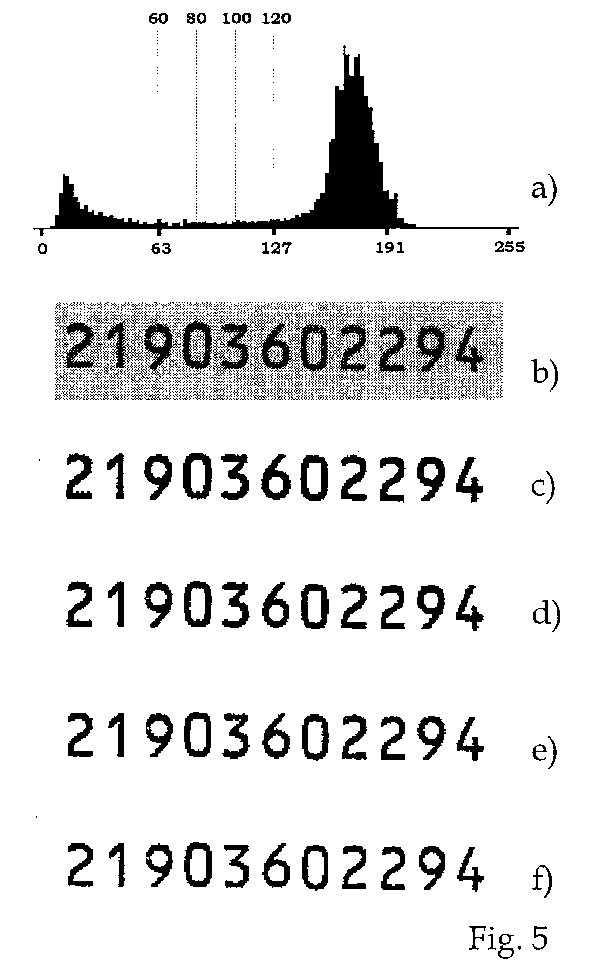

Die Fig. 5 zeigt die analogen Ergebnisse mit der bevorzugten Ausführungsform der Erfindung, bei der die Lichtquelle einen Laser oder eine Laserdiode aufweist. Das von der Lichtquelle 10 emittierte polarisierte Licht 100 wird vom polarisierenden Strahlteiler 20 vollständig transmittiert und das diffus in die dazu senkrechte Polarisationsebene remittierte Licht des Blattguts wird vom polarisierenden Strahlteiler 20 vollständig auf den Detektor 40 reflektiert.

Im Histogramm in Fig.5a liegt die untere Spitze bei ca. 10 und die obere bei 180. Der Abstand der Spitzen ist somit gegenüber den beiden vorherigen Vorrichtungen wesentlich vergrößert und die Breite der Spitzen hat sich verringert. Hieraus folgt ein relativ hoher Hell-/Dunkelkontrast, wie er auch im Graustufenbild Fig. 5b zu sehen ist. Durch den guten Hell-/Dunkelkontrast sind die Schwarz-Weiß-Bilder 5c bis 5f relativ unabhängig von der Wahl der Grenzwerte. Die Ziffern sind in allen Schwarz-Weiß-Bildern gut zu erkennen. Die schwarzen Bereiche der Ziffern sind weitestgehend frei von Reflexen, so daß sie gut erkannt werden können.

Solch ein kontrastreiches, gut erkennbares Bild kann beispielsweise relativ sicher mittels einer OCR (Optical Character Recognition)-Software erkannt und beispielsweise in einem ASCII-Code umgewandelt werden. Dieser läßt sich dann in einer elektronischen Datenverarbeitungsanlage leicht weiterverarbeiten.

Weiterhin ist es möglich die Positionen der Lichtquelle 10 und des Detektors 40 mit den dazugehörigen Optiken 11 bzw. 41 zu vertauschen. Um in der bevorzugten Ausführungsform eine Beleuchtung des Blattguts 30 zu erreichen muß das von der Lichtquelle 10 emittierte Licht 100 in der Polarisationsebene Pₚ polarisiert werden, damit es vom polarisierten Strahlteiler 20 auf das Blattgut 30 reflektiert wird. Vom Detektor 40 wird das in der Polarisationsebene Pₛ polarisierte und durch den Strahlteiler 20 transmittierte Licht detektiert.

## Patentansprüche

1. Vorrichtung zur Detektion von Licht, das von einem Blattgut remittiert wird, mit
- mindestens einer Lichtquelle (10) zur Emission von Licht (100),
- einem Detektor (40) zur Detektion von Licht (110) und
- einem Strahlteiler (20), der so angeordnet ist, daß
- das von der Lichtquelle (10) emittierte Licht (100) das Blattgut beleuchtet und
- das vom Blattgut (30) remittierte Licht (110) den Detektor (40) beleuchtet,
**dadurch gekennzeichnet, daß**
- Mittel (10, 12, 20) vorgesehen sind,
- die das das Blattgut beleuchtende Licht (100) in einer ersten Polarisationsebene (Pₛ) polarisieren und
- die das den Detektor beleuchtende Licht (110) in einer zweiten Polarisationsebene (Pₚ) polarisieren, die senkrecht auf der ersten Polarisationsebene (Pₛ) steht.

2. Vorrichtung nach Anspruch 1, **dadurch gekennzeichnet, daß** die Mittel einen Laser oder eine Laserdiode in der Lichtquelle (10) aufweisen, die in einer Polarisationsebene (Pₛ, Pₚ) polarisiertes Licht (100) emittiert.

3. Vorrichtung nach Anspruch 1, **dadurch gekennzeichnet, daß** die Mittel zwischen der Lichtquelle (10) und dem Strahlteiler (20) einen Polarisator (12) aufweisen, der das von der Lichtquelle (10) emittierte Licht (100) polarisiert.

4. Vorrichtung nach Anspruch 1 bis 3, **dadurch gekennzeichnet, daß** die Mittel zwischen dem Strahlteiler (20) und dem Detektor (40) einen Polarisator (42) aufweisen, der das vom Blattgut remittierte Licht (110) polarisiert.

5. Vorrichtung nach Anspruch 1 bis 3, **dadurch gekennzeichnet, daß** die Mittel im Strahlteiler (20) angeordnet sind, so daß die Anteile des auftreffenden Lichts (100) transmittiert werden, die in der ersten Polarisationsebene (Pₛ) polarisiert sind und die Anteile des auftreffenden Lichts (110) reflektiert werden, die in einer zweiten Polarisationsebene (Pₚ) polarisiert sind, die senkrecht auf der ersten Polarisationsebene (Pₛ) steht.

6. Vorrichtung nach Anspruch 1 bis 3, **dadurch gekennzeichnet, daß** die Mittel im Strahlteiler (20) angeordnet sind, so daß die Anteile des auftreffenden Lichts (100) reflektiert werden, die in der ersten Polarisationsebene (Pₛ) polarisiert sind und die Anteile des auftreffenden Lichts (110) transmittiert werden, die in einer zweiten Polarisationsebene (Pₚ) polarisiert sind, die senkrecht auf der ersten Polarisationsebene (Pₛ) steht.

7. Vorrichtung nach Anspruch 1, **dadurch gekennzeichnet, daß**
- die Lichtquelle (10) eine erste Optik (11) aufweist, die das emittierte Licht (100) auf einen ersten, weitestgehend homogen ausgeleuchteten, rechteckigen Bereich (B₁) auf dem Blattgut abbildet und daß
- der Detektor (40) eine zweite Optik (41) aufweist, die das von einem zweiten rechteckigen Bereich (B₂) auf dem Blattgut remittierte Licht (110) auf ein Detektionsarray abbildet.

8. Vorrichtung nach Anspruch 7, **dadurch gekennzeichnet, daß**
- die Länge (l₁) des ersten Bereichs (B₁) auf dem Blattgut (30) kleiner oder gleich der Länge (l₂) des zweiten Bereichs (B₂) auf dem Blattgut (30) ist,
- die Breite (b₁) des ersten Bereichs (B₁) auf dem Blattgut (30) kleiner oder gleich der Breite (b₂) des zweiten Bereichs (B₂) auf dem Blattgut (30) ist,
- der zweite Bereich (B₂) den ersten Bereich (B₁) vollständig überdeckt.

9. Vorrichtung nach Anspruch 8, **dadurch gekennzeichnet, daß** die Breite (b₁) des ersten Bereichs (B₁) größer oder gleich der Breite (B) des Blattguts ist.

10. Vorrichtung nach Anspruch 7, **dadurch gekennzeichnet, daß** die erste Optik (11) Rasterlinsen aufweist.

11. Vorrichtung nach Anspruch 7, **dadurch gekennzeichnet, daß** das Detektionsarray des Detektors (40) Photodioden oder CCD's aufweist.

12. Vorrichtung nach Anspruch 1, **dadurch gekennzeichnet, daß** die Vorrichtung eine Transportvorrichtung aufweist, mit der das Blattgut (30) in einer Transportrichtung (T) durch die Vorrichtung transportiert, die im wesentlichen senkrecht auf den Mittelachsen (m₁, m₂) der beiden Bereiche (B₁, B₂) steht.

## Claims

1. An apparatus for detecting light diffusely reflected by sheet material having
- at least one light source (10) for emitting light (100),
- a detector (40) for detecting light (110), and
- a beam splitter (20) disposed such that
- the light (100) emitted by the light source (10) illuminates the sheet material, and
- the light (110) diffusely reflected by the sheet material (30) illuminates the detector (40),
**characterized in that**
- means (10, 12, 20) are provided
- which polarize the light (100) illuminating the sheet material in a first plane of polarization (*P*_{*s*}) and
- which polarize the light (110) illuminating the detector in a second plane of polarization (*P*_{*p*}) which is perpendicular to the first plane of polarization (*P*_{*s*}).

2. An apparatus according to claim 1, **characterized in that** the means have a laser or a laser diode in the light source (10) which emits light (100) polarized in one plane of polarization (*P*_{*s*}*, P*_{*p*}).

3. An apparatus according to claim 1, **characterized in that** the means have a polarizer (12) between the light source (10) and the beam splitter (20) for polarizing the light (100) emitted by the light source (10).

4. An apparatus according to claims 1 to 3, **characterized in that** the means have a polarizer (42) between the beam splitter (20) and the detector (40) for polarizing the light (110) diffusely reflected by the sheet material.

5. An apparatus according to claims 1 to 3, **characterized in that** the means are disposed in the beam splitter (20) so that the fractions of incident light (100) polarized in the first plane of polarization (*P*_{*s*}) are transmitted, and the fractions of incident light (110) polarized in a second plane of polarization (*P*_{*p*}) which is perpendicular to the first plane of polarization (*P*_{*s*}) are reflected.

6. An apparatus according to claims 1 to 3, **characterized in that** the means are disposed in the beam splitter (20) so that the fractions of incident light (100) polarized in the first plane of polarization (*P*_{*s*}) are reflected, and the fractions of incident light (110) polarized in a second plane of polarization (*P*_{*p*}) which is perpendicular to the first plane of polarization (*P*_{*s*}) are transmitted.

7. An apparatus according to claim 1, **characterized in that**
- the light source (10) has a first optic (11) which images the emitted light (100) onto a first, very largely homogeneously illuminated rectangular area (*B*₁) on the sheet material, and
- the detector (40) has a second optic (41) which images the light (110) diffusely reflected by a second rectangular area (*B*₂) on the sheet material onto a detection array.

8. An apparatus according to claim 7, **characterized in that**
- the length (*l*₁) of the first area (*B*₁) on the sheet material (30) is smaller than or equal to the length (*l*₂) of the second area (*B*₂) on the sheet material (30),
- the width (*b*₁) of the first area (*B*₁) on the sheet material (30) is smaller than or equal to the width (*b*₂) of the second area (*B*₂) on the sheet material (30),
- the second area (*B*₂) completely covers the first area (*B*₁).

9. An apparatus according to claim 8, **characterized in that** the width (*b*₁) of the first area (*B*₁) is greater than or equal to the width (*B*) of the sheet material.

10. An apparatus according to claim 7, **characterized in that** the first optic (11) has grid lenses.

11. An apparatus according to claim 7, **characterized in that** the detection array of the detector (40) has photodiodes or CCDs.

12. An apparatus according to claim 1, **characterized in that** the apparatus has a transport apparatus which transports the sheet material (30) through the apparatus in a transport direction (*T*) which is substantially perpendicular to the center axes (*m*₁, *m*₂) of the two areas (*B*₁, *B*₂).

## Revendications

1. Dispositif de détection de lumière, réémise par un produit en feuilles, avec
- au moins une source de lumière (10), pour émettre de la lumière (100),
- un détecteur (40) pour détecter de la lumière (110) et
- un diviseur de faisceaux (20) disposé de manière que,
- la lumière (100) émise par la source de lumière (10) illumine le produit en feuilles, et
- la lumière (110) réémise par le produit en feuilles (30) illumine le détecteur (40),
**caractérisé en ce que**
- des moyens (10, 12, 20) sont prévus,
- qui polarisent dans un premier plan de polarisation (Pₛ) la lumière (100) illuminant le produit en feuilles
- qui polarisent dans un deuxième plan de polarisation (Pₚ) la lumière (110) illuminant le détecteur, le deuxième plan étant perpendiculaire au premier plan de polarisation (Pₛ).

2. Dispositif selon la revendication 1, **caractérisé en ce que** les moyens présentent un laser ou bien une diode laser dans la source de lumière (10), qui émet de la lumière (100) polarisée dans un plan de polarisation (Pₛ, Pₚ).

3. Dispositif selon la revendication 1, **caractérisé en ce que** les moyens présentent, entre la source de lumière (10) et le diviseur de faisceaux (20), un polariseur (12) polarisant la lumière (100) émise par la source de lumière (10).

4. Dispositif selon les revendications 1 à 3, **caractérisé en ce que**, entre le diviseur de faisceaux (20) et le détecteur (40), les moyens présentent un polariseur (42) polarisant la lumière (110) réémise par le produit en feuilles.

5. Dispositif selon les revendications 1 à 3, **caractérisé en ce que** les moyens sont disposés dans le diviseur de rayon (20), de manière que soient transmises les proportions de lumière (100) incidentes, qui sont polarisées dans le premier plan de polarisation (Pₛ) et que soient réfléchies les proportions de lumière sortantes (110) qui sont polarisées dans un deuxième plan de polarisation (Pₚ) perpendiculaire au premier plan de polarisation (Pₛ).

6. Dispositif selon les revendications 1 à 3, **caractérisé en ce que** les moyens sont agencés dans le diviseur de faisceaux (20) de manière que soient réfléchies les proportions de lumière incidente (100), qui sont polarisées dans le premier plan de polarisation (Pₛ) et que soient transmises les proportions de lumière incidente (110) qui sont polarisées dans un deuxième plan de polarisation (Pₚ) perpendiculaire au premier plan de polarisation (Pₛ).

7. Dispositif selon la revendication 1, **caractérisé en ce que** :
- la source de lumière (10) présente une première optique (11) qui, donne une représentation, sur le produit en feuilles, de la lumière (100) émise sur une première zone (B₁) rectangulaire illuminée de façon la plus homogène possible, et **en ce que**
- le détecteur (40) présente une deuxième optique (41) qui donne une illustration sur une matrice de détection de la lumière (110) réémise du produit en feuilles, par une deuxième zone (B₂) rectangulaire.

8. Dispositif selon la revendication 7, **caractérisé en ce que** :
- la longueur (*l*1) de la première zone (B₁) sur le produit en feuilles (30) est inférieure ou égale à la longueur (*l*2) de la deuxième zone (B₂) sur le produit en feuilles (30),
- la largeur (b₁) de la première zone (B₁) sur le produit en feuilles (30) est inférieure ou égale à la largeur (b₂) de la deuxième zone (B₂) sur le produit en feuilles (30),
- la deuxième zone (B₂) recouvre complètement la première zone (B₁).

9. Dispositif selon la revendication 8, **caractérisé en ce que** la largeur (b₁) de la première zone (B₁) est supérieure ou égale à la largeur (B) du produit en feuilles.

10. Dispositif selon la revendication 7, **caractérisé en ce que** la première optique (11) présente des lentilles de tramage.

11. Dispositif selon la revendication 7, **caractérisé en ce que** la matrice de détection du détecteur (40) présente des photodiodes ou des éléments CCD.

12. Dispositif selon la revendication 1, **caractérisé en ce que** le dispositif présente un dispositif de transport, à l'aide duquel le produit en feuilles (30) est transporté à travers le dispositif, dans une direction de transport (T) qui est perpendiculaire aux axes médians (m₁, m₂) des deux zones (B₁, B₂).
